# EUROPEAN PATENT SPECIFICATION

(11) **EP 2 416 645 B1**
(45) Date of publication and mention of the grant of the patent: **25.12.2019**
(21) Application number: 10762300.1
(22) Date of filing: 06.04.2010
(51) Int. Cl.: A01M 1/20, A01M 1/04

(54) **FLY ATTRACTANT SYSTEM WITH TOXICANT-TREATED CATCHING MEMBERS**
FLIEGENFANGSYSTEM MIT MITTELS EINES GIFTSTOFFS BEHANDELTEN KÖDERN
SYSTÈME ATTIRANT LES MOUCHES AVEC LEURRES TRAITÉS AVEC UN PRODUIT TOXIQUE

(30) Priority: 08.04.2009 US 167545 P
(43) Date of publication of application: 15.02.2012
(73) Proprietor: University of Florida Research Foundation, Inc., Gainesville, FL 32611 (US); Diclaro, Joseph W., Gainesville, FL 32606 (US); Pereira, Roberto M., Gainesville, FL 32653 (US); Hertz, Jeffrey C., Orange Park, FL 32073 (US); Koehler, Philip G., Gainesville, FL 32605 (US)
(72) Inventor: Diclaro, Joseph W., Gainesville, FL 32606 (US); Pereira, Roberto M., Gainesville, FL 32653 (US); Hertz, Jeffrey C., Orange Park, FL 32073 (US); Koehler, Philip G., Gainesville, FL 32605 (US)
(74) Representative: Berggren Oy, Helsinki & Oulu
(86) International application number: PCT/US2010/030093
(87) International publication number: WO 2010/118024

(56) References cited:
- WO-A1-91/09519
- US-A- 4 930 251
- US-A- 5 018 299
- US-A- 5 170 583
- US-A1- 2003 151 006
- US-A1- 2005 144 831
- US-A1- 2006 016 120
- US-A1- 2007 148 051
- US-B2- 6 389 740
- US-B2- 6 389 740

## Description

This invention relates to a device and method of attracting and capturing fly type insects with toxicant treated cords and strips attached to sidewall surface(s) of housings.

This invention was made with government support under Eval of New Tech for Protection of Military Personnel; contract number W81XWH-Q4-I-0868, awarded by the U.S. Army. The government has certain rights in the invention.

Over the years various techniques, devices and systems have been proposed to trap pests such as flies and other flying insects with limited results.

WO-A-91/09519 discloses a device for attracting and killing flies comprising a half-cylindrical housing.

US-B-6772556 describes cylinders that having parallel strings across an opening, abstract, where narrow spaces between the strings will eventually trap the flies in the cylinder which can also have insecticides and/or other attractants, and the reference mentions colours such as "black" as an attractant colour. The string is not treated and is stretched across the opening of the trap in accordance to the size of the insect that is being trapped. US-B-6772556 uses string stretched over an opening. This trap does not specify any visual attraction.

US-B-5018299 describes fly decoys formed from "yarn... impregnated with an attractant" with "pesticide" and affixed to a structure by "tack, magnet or adhesive" (abstract) and the yarn can be "black" (column 2). This patent just says that black is attractive which is wrong since black does not attract by itself.

US-A-4986024 describes a cylindrical shaped "sleeve" with attractant and pesticide (Abstract) from which the treated yarn strips described in '299 can hang. '024 uses an absorbent piece of siring or yarn inside of the cylinder for pesticide delivery that does not specify any colour. Also the cylinder is one piece not two.

US- A-5461822 describes a trap where flies are lured in by a food source and the flies pass through a funnel and cannot exit therefrom. '822 describes a "cylindrical...shell" having an inverted "funnel" inside having edible food type bait, and a "string" hanging below the funnel as a landing platform so that flies can go up the string inside of the inverted funnel and get trapped inside.

Much of the prior art is used to generally trap insects with chemical attractants and baits and not for attracting insects with colours. Many of the prior art attractants can have unpleasant odors and smells and need constant ventilation which restricts their use to outdoors. Thus, much of the prior art cannot be used indoors since they have unpleasant smells and odors that emanate therefrom. Much of the prior art is limited to cylindrical type containers that may not be useable in all indoor and outdoor applications, as well as not be aesthetically pleasing as to its shape. Other prior art devices have expensive components and would not be economical or user friendly to both indoor and outdoor applications. Thus the need exists for solutions to the above problems with the prior art.
A primary objective of the present invention is to provide devices and methods of both attracting and killing flying insects such as flies, at a single location with a visual attractant and not limited to chemical or bait type attractants.
A secondary objective of the present invention is to provide devices and methods of using darkened insecticide treated strips attached to a solid side surface to simulate a crack or crevice so as to confuse and attract flies to believe the darkened strips are shelter in order to attract and kill the flies.
A third objective of the present invention is to provide devices and methods of both attracting and killing flying insects such as flies at a single location that is easily used indoors as well as outdoors,
A fourth objective of the present invention is to provide devices and methods of both attracting and killing flying insects such as flies at a single location with attractants that are without any unpleasant odors and are odor free.
A fifth objective of the present invention is to provide devices and methods of both attracting and killing flying insects such as flies at a single location with an inexpensive insect attractant system with toxicant treated cords.
A sixth objective of the present invention is to provide devices and methods of both attracting and killing flying insects such as flies at a single location with devices that can have various shapes such as but not limited to cylinders, squares, rectangles, triangles and other geometrical shapes and combinations thereof.

Thus viewed from a first aspect the present invention provides a device for attracting and killing flies comprising: a substrate member having a solid side wall surface with a blue colour substantially across a face of the surface, the blue colour being an attractant for the flies; at least one narrow diameter elongated member having a portion directly located on the solid side wall surface and having a black colour which contrasts with the blue colour on the solid side wall surface such that the portion of the at least one narrow diameter elongated member located on the substrate member appears to be a crack to the flies, wherein the crack is perceived to be a shelter to the flies; a substance associated with the device for killing or catching flies, wherein the at least one narrow diameter elongated member is treated with the substance, wherein the substrate member is a triangular-shaped container.

Viewed from a further aspect the present invention provides a method of attracting and killing flies comprising the steps of: providing a substrate member with at least one solid side wall surface having a blue colour; locating at least one narrow diameter elongated member directly on a portion of the substrate member, the at least one narrow diameter elongated member having a black colour that contrasts the blue colour of the solid side wall surface such that the at least one narrow diameter elongated member located on the portion of the substrate member visually appears to be a crack or a crevice to the flies; treating at least one of the substrate member or the at least one narrow elongated member with a substance that will trap or kill the flies; visually attracting the flies to the at least one narrow diameter elongated member, wherein the blue colour visually attracts the flies to the substrate member and the at least one narrow diameter elongated member appears as a shelter to the flies; and trapping or killing the flies with the substance.

The substrate member (eg trap) does not trap live insects. It may be used to kill the insects with insecticide bait and/or with a residual product in a string.

For the substrate member the string may be on the outside surface to serve as a visual attractant. The substrate member combines the visual attraction with a food attractant.

The invention may use black yarn to simulate a crack that the fly would seek for shelter. We do not use a fly shape to attract flies. The invention can use the colour of the substrate member and the yarn together to attract flies to a simulated crack. Black is not an attractive colour to flies, except when it is placed in front of an attractive colour like blue.

The invention may use black yarn which needs to be on the outside of the substrate member and in a preferred embodiment connects two cylinders. The inventors have determined that using treated yarn inside a substrate member or just across openings is not as effective as having black yarn in front of an attractive colour. The fly can be attracted at a distance to the colour of the substrate member. Once in close it thinks the black yarn is a crack and goes to it. The yarn is treated with either a bait or residual product that kills the fly as it feeds or contacts the yarn. In a preferred embodiment, the inventors have determined that wool is the best product for delivery of insecticide.

The invention can have a substrate member that can include a square shape rather than a cylinder and that will work well. The preferred embodiments of the invention are not for trying to trap insects such as flies, just to attract them and kill them at the device.

One embodiment of the invention is the combination of having two cylinders with yarn strips running down the sides of the cylinders and creating a space between the cylinders, and using blue chloroplast rolled material.

Another embodiment of the invention can use black lines that simulate a harborage for flies as being attractive

Another embodiment can use a blue coloured card with black line(s) thereon, with the card having a sticky (adhesive) surface that can be used in light traps.

The cords that can be used can include but are not limited to a natural fiber cord (such as but not limited to a wool cord), a wool blend and combinations thereof.

Further objects and advantages of this invention will be apparent from the following detailed description of the presently preferred embodiments which are illustrated schematically in the accompanying drawings.
FIG. 1 is a perspective view of two housing containers suspended from one another, with strips/cords of treated yarn attached to the side surfaces of the containers.
FIG. 2 is an enlarged view of the suspended lower housing container of FIG. 1.
FIG. 3 is a top view of the suspended lower housing container of FIG. 2.
FIG. 4 shows a sheet of material formed for creating one of the housing containers.
FIG. 5 is a perspective view of an experimental setup of the invention using cylindrical shaped containers suspended from one another by the yarn strips/cords.
FIG. 6 is another view of the setup of FIG. 5 above a container to collect the killed flies.
FIG. 7 is a graph of the number of dead flies while the experiment was running.
FIG. 8 shows the method steps for forming the fly attractant and fly kill device.
FIG. 9 shows a "sticky card" embodiment of the invention with line(s)/elongated members of one colour on a substrate of a contrasting colour.

Before explaining the present invention in detail it is to be understood that the invention is not limited in its applications to the details of the particular arrangements shown since the invention is capable of other embodiments. Also the terminology used herein is for the purpose of description and not of limitation.

The components of a preferred embodiment will now be listed.
1. Double box hanging embodiment
2. Hanger strip
10. Upper container housing
20. Lower container housing
25. Closed floor/bottom of lower container
30. Outer yarn strip(s)/cord(s)
40. Cross-brace yarn strip(s)/cord(s)
50. Double cylinder hanging embodiment
52. Hanger strip
60. Upper cylinder
70. Lower cylinder
80. Outer yarn strip(s)/cord(s)
85. Cross-brace yarn strip(s)/cord(s)
90. Collector container
100. Sticky card
102. Hanging member
110. Surface with glue/adhesive layer
120. Elongated narrow line(s)

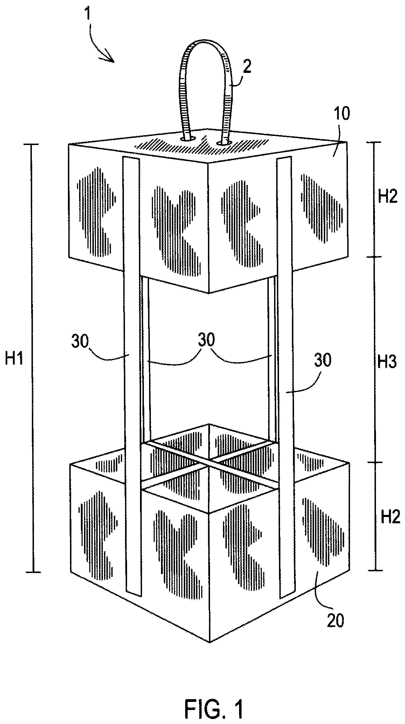

FIG. 1 is a perspective view of two hanging housing containers 1 suspended from one another, with strips/cords 30 of treated yarn attached to the side surfaces of the containers 10, 20. Each of the containers 10, 20 can have a rectangular box configuration.

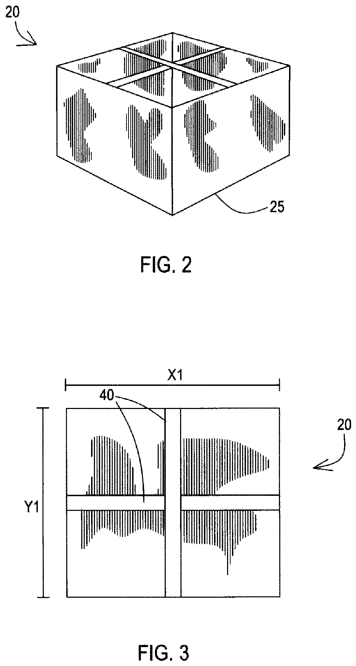

FIG. 2 is an enlarged view of the suspended lower housing container 20 of FIG. 1, with the cross-brace yarn strip(s)/cords 40 across the upper open end of the housing container.

FIG. 3 is a top view of the suspended lower housing container 20 of FIG. 2 showing the cross-brace yarn strip(s)/cord(s).

Referring to Figures 1-3, in a preferred embodiment two or more boxes 10 and 20 have rectangular shapes stacked on top of one another and connected to one another by a darkened insecticide treated yarn 30. Each box 10 and 20 can be formed from blue Coroplast® sign board material. The darkened yarn can be natural fiber cords (such as approximately 100% wool black yarn strips such as but not limited to Wool-Ease ®, colour black 153). The yarn strips/cords 30 can be treated with an insecticide attractant by soaking the strips in approximately 2.5% imidacloprid bait (Maxforce ® Fly Spot bait (Bayer CropScience, Kansas City, MO 64120)) for approximately 1 minute.

Upper portions of four yarn strips/cords 30 can be attached across mid portions of the side wall surfaces of the upper container 10 by adhesives such as glue. Lower portions of the four yarn strips/cords 30 can be attached across mid portions of the side wall surfaces of the hollow lower containers 20 also by adhesives, so that there can be a gap between the bottom of the upper container 10 and the top of the hollow lower container 20.

Across the top of the lower container 20 and optionally across the bottom of the upper container 20 can be cross-brace strips 40 of the treated yarn which can act as cross-braces for holding the shapes of the box shaped containers 10, 20. The bottom of the lower container 20 can also have a floor 25 so that any flies which are killed drop inside.

Each of the box shaped containers 10, 20 can have lengths XI and widths Y1 of approximately 13 cm, with a height H2 of approximately 8 cm. The boxes can be separated H3 at approximately 14 cm apart so that the overall vertical height H1 of the upper container 10 with suspended bottom container 20 can be approximately 30 cm. A hanger 2 such as a flexible plastic strip attached to the top of the upper container 10 can allow for hanging the double box shaped hanging containers 1 to trees, from underneath tables, signs and posts in both indoor and outdoor applications.

From a distance, insects such as flies can be attracted to the blue colour on the sides of the box shaped containers 10, 20, and the black strips 30 can confuse the flies to believe the black strips 30 are cracks or crevices which a fly can perceive as a shelter. The fly will land on the yarn strips and believe it is food, where once they feed on the strips the flies can die within seconds to minutes.

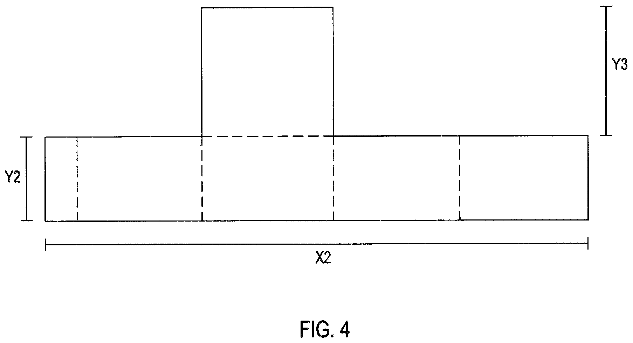

FIG. 4 shows a sheet of material formed for creating each of the housing containers 10 and 20. A single sheet of material such as a plastic sheet can be manufactured or formed in an upside down T-shape, having a 54 cm length X2 with 8 cm height Y2, with a 13 cm by 13 cm block portion extending upward from near a mid-portion of the 54 cm length portion. The user can fold the 54 cm portion into a box shape such as the containers 10, 20 shown in the previous figures, and cover one open end with the flap formed by the 13 by 13 cm section. Adhesives such as glue and/or fasteners such as staples can hold the walls and flap together. Also two crossed pieces of the yarn strips/cords 30, 40 can be attached across the opposite open end as well to help keep the box shape in place.

The hanging containers 10, 20 can resemble small boxes, such as those sold in Chinese restaurants. The boxes and containers 10, 20 can also be easily stored in their flattened state as shown in FIG. 4 so that the materials do not take up much room and are easily transportable.

The sheets of materials can also be formed and pre-attached together so that pulling the containers apart forms the overall assembled shapes (box shapes) 10, 20 of the containers without having to do any other assembly.

The yarn strips/cords 30 between the two containers can be held taught by the weight of the lower hanging container 20.

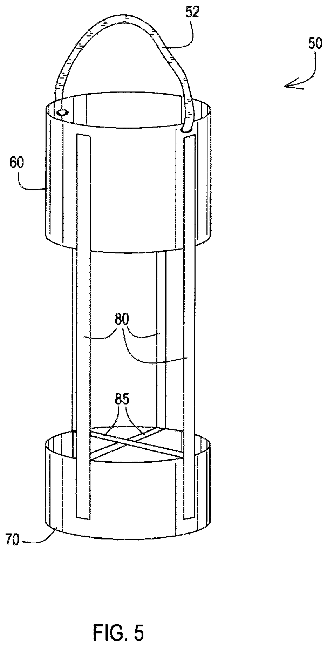

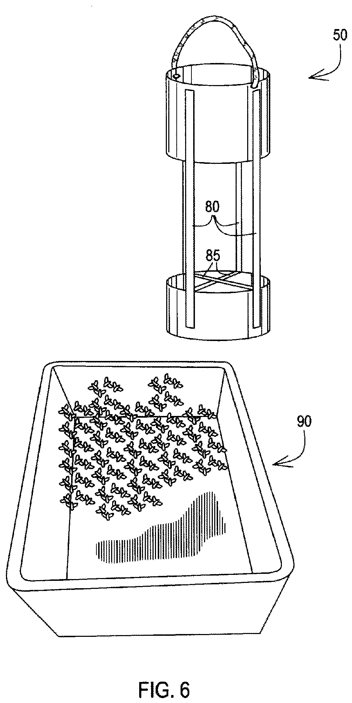

FIG. 5 is a perspective view of an experimental setup of the invention using double cylinder hanging strips 50 and cylindrical shaped containers 60, 60 suspended from one another by the yarn strips/cords 80. A hanging strip 52 can be used to hang the device in place. FIG 6 is another view of the setup 50 of FIG. 5 above a container 90 to collect the killed flies.

Referring to FIGURES 5-6, the invention was reduced to practice by forming two cylinders 60, 70 stacked on top of one another and connected to each other by black insecticide treated wool yarn strips 80. The top cylinder 60 can be made of blue Coroplast® sign board material that was cut in 38 x 11 cm strip and rolled up in a cylinder shape of approximately 12.5cm diameter with ends hot glued together. A 237 ml clear plastic deli cup (8 ox clear plastic container, # APCTR08; American Plastic Industries Ltd. Chattanooga; TN) was hot glued inverted to the bottom of the top portion of the device.

A 13cm long piece of insecticide treated black yarn strip 80 was extended across the open end of the cup and glued in place with hot glue. The bottom cylinder 70 was similar to the top cylinder 60 with a 38 x 7 cm blue plastic sign board used. A deli cup was hot glued inside the bottom portion of the device. Across the open upper end of the bottom portion of the device were two 13cm pieces of 13cm long insecticide treated black yarn strips 85 across the open end with ends hot glued in place. The yarn strips 80, 85 were Wool-Ease ®, colour back 153. The yarn strips 80, 85 were treated with an insecticide attractant by soaking the strips in approximately 2.5% imidacloprid bait (Maxforce ® Fly Spot bait (Bayer CropScience, Kansas City, MO 64120)) for approximately 1 minute. A composition can be the combination of the treated yarn strips.

The two cylinders 60, 70 were connected by four evenly spaced parallel 30 cm long treated pieces 80 of wool yarn 5 mm in diameter extending from the top to bottom portions of the device 50, which were separated by an approximately 11 cm space.

The fly attractant experimental device with toxicant treated cords 80, 85 was placed near fly infested garbage cans, which eliminated 3006 flies in 24 hours.

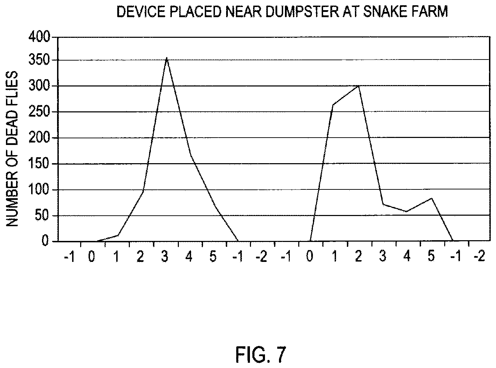

FIG. 7 is a graph of the number of dead flies while the experiment was running. This graph shows the number of dead flies killed by the fly attractant system with toxicant treated cords near a house fly infested dumpster on a snake farm. The negative numbers are the number of days the device was in service, with zero representing the days the device was put in place.

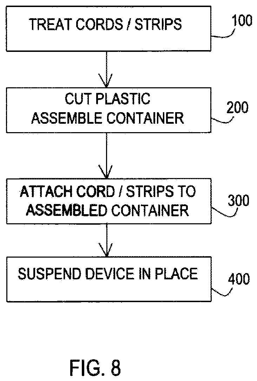

FIG. 8 shows the method steps for forming the fly attractant and fly kill device. A first step 100 is to treat the cords/strips, such as the black natural fiber cords with an insecticide. The second step 200 is to cut and assemble the plastic materials which include box containers or cylinder containers. The third step 300 is to attach the treated cords/strips to allow for the containers/cylinders to be suspended from one another and the fourth step 400 is to hang the double suspended containers in an indoor and/or an outdoor location to attract flying insects with the colour attractant and to kill those insects.

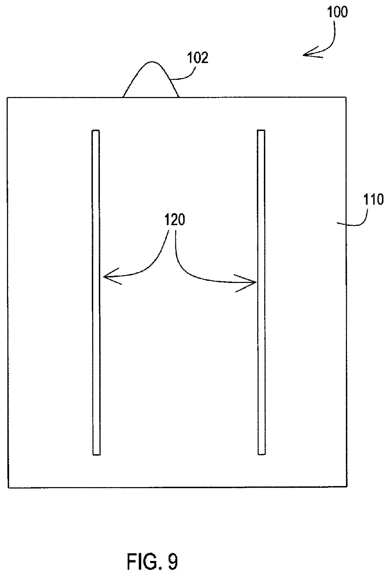

FIG. 9 shows a "sticky card" embodiment of the invention with liπe(s)/elongated members of one colour on a substrate of a contrasting colour.

The card can be made of cardboard or thin plastic sheet 100 and have dimensions of approximately 3" by approximately 5", up to approximately 18" by approximately 10", or more. The card can have a waterproof surface or waterproof surface coating thereon, with a sticky glue adhesive layer 110 on either the front or the back, or on both surfaces of the card 100. Vertical or horizontal line(s) 120 can run down or across the card surface 110 and be of a black colour that contrasts with the blue colour of the substrate surface 110. The card 100 can be hung from a support by a hanging member 102. The line(s) can be painted or printed on the substrate surface. The line(s) can also include insecticides in the line(s) or without insecticides.

The line or lines can range from approximately 1/16" to approximately 1" wide, and preferably in the range of approximately 1/4" to approximately 1/2" wide. The length of the line(s) can range from approximately 3/4" to approximately 18" long. Also the length of the line(s) can be as long as the length or width of the card where the line(s) are used.

The contrasting coloured line(s) can be a visual attractant to the flying insects (such as flies) where the surrounding "sticky" surface can trap the insects thereon. Also the line(s) can have insecticide as well to further kill the insects. Also the line(s) can also have a "sticky" surface for trapping the insects.

Also the "sticky" cards can have narrow diameter natural fiber cords (such as but not limited to black wool) attached to the surface.

The invention can be sold in kit forms with rechargeable/refillable components. For example, a kit can include a spray bottle or droplet dispenser with a liquid type insecticide so that the yarn type strips can be recharged over time when the attractant has worn out.

Another embodiment can allow for having built in ampoules of insecticide attractant that is attached to an upper end of the strips/cords so that the strips/cords are constantly being replenished where the insecticide is metered out over time.

Another embodiment of the invention can use the colour blue with black lines that simulate a harborage for flies as being attractive.

The cords that can be used can include but are not limited to a natural fiber cord (such as but not limited to a wool cord) a wool blend or combinations thereof.

The invention has great applicability for home use, outside garden and patio and porch and deck use. Additionally the invention can be made to be inexpensive to consumers. The invention can also be used in other settings such as indoor and outdoor locations such as but not limited to restaurants, outdoor cafes, hospitals, military locations, dairies or picnic tables where flies and similar flying insects are a problem.

While the drawings show the container housings having rectangular shapes, the housings can have other geometrical shapes such as cylindrical or triangular, the latter being according to the invention.

Also the cord(s) and strip(s) used in the hanging containers (cylinders and boxes) can be painted or printed on line(s) that are oriented vertically and/or horizontally and/or in other directions across the surface of the substrate (containers, housing, cards). The line(s) can also if needed be treated with an insecticide.

Additionally the solid side surfaces of the hanging containers can have sticky side surfaces thereon that are about the narrow diameter elongated members.

## Claims

1. A device for attracting and killing flies comprising:
a substrate member having a solid side wall surface with a blue colour substantially across a face of the surface, the blue colour being an attractant for the flies;
at least one narrow diameter elongated member (30) having a portion directly located on the solid side wall surface and having a black colour which contrasts with the blue colour on the solid side wall surface such that the portion of the at least one narrow diameter elongated member (30) located on the substrate member appears to be a crack to the flies, wherein the crack is perceived to be a shelter to the flies;
a substance associated with the device for killing or catching flies, wherein the at least one narrow diameter elongated member (30) is treated with the substance,
wherein the substrate member is a triangular-shaped container.

2. The device of claim 1, wherein the at least one narrow diameter elongated member (30) is painted or printed on the solid side wall surface and the substance is an insecticide.

3. The device of claim 1, wherein the at least one narrow diameter elongated member (30) is a natural fiber cord and the substance is an insecticide.

4. The device of claim 1 wherein the container has at least one solid side wall surface, with the at least one narrow diameter elongated member (30) on the solid side wall surface treated with an insecticide.

5. A method of attracting and killing flies comprising the steps of:
providing a substrate member with at least one solid side wall surface having a blue colour;
locating at least one narrow diameter elongated member (30) directly on a portion of the substrate member, the at least one narrow diameter elongated member (30) having a black colour that contrasts the blue colour of the solid side wall surface such that the at least one narrow diameter elongated member (30) located on the portion of the substrate member visually appears to be a crack or a crevice to the flies;
treating at least one of the substrate member or the at least one narrow elongated member (30) with a substance that will trap or kill the flies;
visually attracting the flies to the at least one narrow diameter elongated member (30), wherein the blue colour visually attracts the flies to the substrate member and the at least one narrow diameter elongated member (30) appears as a shelter to the flies; and
trapping or killing the flies with the substance.

6. The method of claim 5 further comprising the steps of:
providing a natural fiber cord as the narrow diameter elongated member (30); and
treating the narrow diameter elongated member (30) with an insecticide as the substance.

## Patentansprüche

1. Vorrichtung zum Anlocken und Töten von Fliegen, umfassend:
ein Trägerelement mit einer massiven Seitenwandfläche mit einer blauen Farbe im Wesentlichen über eine Seite der Fläche hinweg, wobei die blaue Farbe die Fliegen anlockt;
mindestens ein längliches Element mit geringem Durchmesser (30), das einen Abschnitt aufweist, der direkt an der massiven Seitenwandfläche angeordnet ist, und eine schwarze Farbe aufweist, die einen Kontrast zur blauen Farbe an der massiven Seitenwandfläche bildet, sodass der Abschnitt des mindestens einen länglichen Elements mit geringem Durchmesser (30), der am Trägerelement angeordnet ist, für die Fliegen wie eine Ritze aussieht, wobei die Ritze von den Fliegen als Unterschlupf wahrgenommen wird;
eine der Vorrichtung zugehörige Substanz zum Töten oder Anlocken von Fliegen, wobei das mindestens eine längliche Element mit geringem Durchmesser (30) mit der Substanz behandelt ist,
wobei das Trägerelement ein dreieckig geformter Behälter ist.

2. Vorrichtung nach Anspruch 1, wobei das mindestens eine längliche Element mit geringem Durchmesser (30) auf der massiven Seitenwandfläche lackiert oder bedruckt ist und die Substanz ein Insektizid ist.

3. Vorrichtung nach Anspruch 1, wobei das mindestens eine längliche Element mit geringem Durchmesser (30) eine Naturfaserschnur ist und die Substanz ein Insektizid ist.

4. Vorrichtung nach Anspruch 1, wobei der Behälter mindestens eine massive Seitenwandfläche aufweist, wobei das mindestens eine längliche Element mit geringem Durchmesser (30) an der massiven Seitenwandfläche mit einem Insektizid behandelt ist.

5. Verfahren zum Anlocken und Töten von Fliegen, das folgende Schritte umfasst:
Bereitstellen mindestens eines Trägerelements mit mindestens einer massiven Seitenwandfläche mit einer blauen Farbe;
Anordnen von mindestens einem länglichen Element mit geringem Durchmesser (30) direkt an einem Abschnitt des Trägerelements, wobei das mindestens eine längliche Element mit geringem Durchmesser (30) eine schwarze Farbe aufweist, die einen Kontrast zur blauen Farbe der massiven Seitenwandfläche bildet, sodass das mindestens eine längliche Element mit geringem Durchmesser (30), das an dem Abschnitt des Trägerelements angeordnet ist, für die Fliegen optisch wie eine Ritze oder ein Spalt aussieht;
Behandeln des Trägerelements und/oder des mindestens einen schmalen länglichen Elements (30) mit einer Substanz, die die Fliegen fängt oder tötet;
optisches Anlocken der Fliegen zu dem mindestens einen länglichen Element mit geringem Durchmesser (30), wobei die blaue Farbe die Fliegen optisch zu dem Trägerelement hin anlockt und das mindestens eine längliche Element mit geringem Durchmesser (30) für die Fliegen wie ein Unterschlupf aussieht; und
Fangen oder Töten der Fliegen mit der Substanz.

6. Verfahren nach Anspruch 5, das ferner folgende Schritte umfasst:
Bereitstellen einer Naturfaserschnur als das längliche Element mit geringem Durchmesser (30); und
Behandeln des länglichen Elements mit geringem Durchmesser (30) mit einem Insektizid als die Substanz.

## Revendications

1. Dispositif destiné à attirer et tuer des mouches comprenant :
un élément substrat ayant une surface de paroi latérale pleine avec une couleur bleue sensiblement d'un bout à l'autre d'une face de la surface, la couleur bleue étant un attractif pour les mouches ;
au moins un élément allongé de diamètre étroit (30) ayant une partie directement positionnée sur la surface de paroi latérale pleine et ayant une couleur noire qui contraste avec la couleur bleue sur la surface de paroi latérale pleine de telle sorte que la partie de l'au moins un élément allongé de diamètre étroit (30) positionnée sur l'élément substrat semble être une fissure pour les mouches, la fissure étant perçue comme un abri pour les mouches ;
une substance associée au dispositif destiné à tuer ou attraper des mouches, l'au moins un élément allongé de diamètre étroit (30) étant traité avec la substance,
l'élément substrat étant un récipient de forme triangulaire.

2. Dispositif de la revendication 1, dans lequel l'au moins un élément allongé de diamètre étroit (30) est peint ou imprimé sur la surface de paroi latérale pleine et la substance est un insecticide.

3. Dispositif de la revendication 1, dans lequel l'au moins un élément allongé de diamètre étroit (30) est une corde en fibres naturelles et la substance est un insecticide.

4. Dispositif de la revendication 1 dans lequel le récipient a au moins une surface de paroi latérale pleine, avec l'au moins un élément allongé de diamètre étroit (30) sur la surface de paroi latérale pleine traité avec un insecticide.

5. Procédé pour attirer et tuer des mouches comprenant les étapes consistant à :
se procurer un élément substrat avec au moins une surface de paroi latérale pleine ayant une couleur bleue ;
positionner au moins un élément allongé de diamètre étroit (30) directement sur une partie de l'élément substrat, l'au moins un élément allongé de diamètre étroit (30) ayant une couleur noire qui contraste avec la couleur bleue de la surface de paroi latérale pleine de telle sorte que l'au moins un élément allongé de diamètre étroit (30) positionné sur la partie de l'élément substrat semble visuellement être une fissure ou une crevasse pour les mouches ;
traiter l'élément substrat et/ou l'au moins un élément allongé de diamètre étroit (30) avec une substance qui piégera ou tuera les mouches ;
attirer visuellement les mouches jusque l'au moins un élément allongé de diamètre étroit (30), la couleur bleue attirant visuellement les mouches jusque l'élément substrat et l'au moins un élément allongé de diamètre étroit (30) apparaissant comme un abri pour les mouches ; et
piéger ou tuer les mouches avec la substance.

6. Procédé de la revendication 5 comprenant en outre les étapes consistant à :
se procurer une corde en fibres naturelles en tant que l'élément allongé de diamètre étroit (30) ; et
traiter l'élément allongé de diamètre étroit (30) avec un insecticide en tant que la substance.
